# EUROPEAN PATENT SPECIFICATION

(11) **EP 3 766 691 B1**
(45) Date of publication and mention of the grant of the patent: **17.05.2023**
(21) Application number: 20185078.1
(22) Date of filing: 09.07.2020
(51) Int. Cl.: B32B 18/00, B29C 65/00, C04B 37/00, C04B 35/83, C04B 35/80, C04B 35/573, C04B 35/528, B29C 70/42, B29C 70/84, B29C 70/86

(54) **A METHOD FOR MAKING A PREFORM OF FIBER-REINFORCED COMPOSITE MATERIAL**
VERFAHREN ZUR HERSTELLUNG EINER VORFORM AUS FASERVERSTÄRKTEM VERBUNDWERKSTOFF
PROCÉDÉ DE FABRICATION D'UNE PRÉFORME DE MATÉRIAU COMPOSITE RENFORCÉ PAR FIBRES

(30) Priority: 15.07.2019 IT 201900011760
(43) Date of publication of application: 20.01.2021
(73) Proprietor: Petroceramics S.p.A., 24040 Stezzano, Bergamo (IT); C.I.R.A. (Centro Italiano Ricerche Aerospaziali) - S.C.P.A., 81043 Capua (CE) (IT)
(72) Inventor: CAVALLI, Lorenzo, I-24040 Stezzano, BERGAMO (IT); VALLE, Massimiliano, I-24040 Stezzano, BERGAMO (IT); DE STEFANO FUMO, Mario, I-81043 Capua, CASERTA (IT); RUFOLO, Giuseppe Carmine, I-81043 Capua, CASERTA (IT); GARDI, Roberto, I-81043 Capua, CASERTA (IT); CANTONI, Stefania, I-81043 Capua, CASERTA (IT)
(74) Representative: Zanettin, Gianluigi

(56) References cited:
- EP-A1- 2 472 136
- EP-A1- 3 725 513
- WO-A1-2019/026035
- US-A1- 2014 272 274
- US-A1- 2016 289 127
- US-A1- 2017 096 537
- US-B1- 6 648 597

## Description

### Field of application

A method for making a preform of a fiber-reinforced composite material is the object of the present invention.

Advantageously, the method object of the present invention allows making preforms in fiber-reinforced composite material having high mechanical characteristics and, at the same time, highly complex geometries.

The preforms, which can be obtained with the method according to the invention, can be used to obtain components in a fiber-reinforced polymer composite material or they can be intended for subsequent densification with carbon or infiltrated with silicon, following a pyrolysis treatment, to obtain components in a fiber-reinforced ceramic composite material or in a fiber-reinforced carbon-carbon composite material.

In particular, with the preforms according to the invention, it is possible to make components for planes, space ships, ships, cars, trains and industrial machines with structural functionalities and resistance to sources of heat.

### Background art

Generally, the processes for obtaining components in a fiber-reinforced composite material (polymer or ceramic or carbon-carbon) comprise an initial step of forming the component, starting from fibrous materials impregnated by binders, which are more commonly organic, but also inorganic. Typically, such fibrous materials consist of pre-pregs, impregnated with binder resins.

A pre-preg consists of continuous fibers, generally carbon fibers and/or glass fibers and/or ceramic fibers, arranged so as to form a fabric or a non-woven fabric, and impregnated with a thermosetting or thermoplastic polymer composition. During any molding process, the polymer composition, impregnating the fibers, forms a binding matrix, which fixes the fibers to one another.

Typically, in the case of ceramic composites the polymer composites are treated thermally and the polymer matrix is transformed in the inorganic part thereof.

Typically, in the case of ceramic composites, other components are added in subsequent densification steps, for example, in the ceramic composites obtained by liquid silicon infiltration, pre-pregs of carbon fibers, impregnated with phenolic resins, subsequently pyrolyzed and infiltrated with liquid silicon, are used.

Generally, the step of forming pre-pregs with continuous fibers can be obtained using one of the following techniques: vacuum bagging; resin transfer molding; vacuum infusion; or compression molding.

With respect to the vacuum bagging, vacuum infusion and resin transfer molding techniques, the compression molding technique (also known as uniaxial compression) has significant technical advantages for some applications.

Firstly, the compression molding technique allows a greater forming pressure to be exerted than with the other techniques. This gives an improved packing of the fibers and, in general, a composite with superior mechanical characteristics. A second advantage of the compression molding technique is the reduced forming time and the simplicity of the process, which does not require the use of vacuum pumps and relative accessories and relatively complex assemblies or autoclaves for the posttreatment.

Therefore, the compression molding technique is a technique, which lends itself well to producing high numbers with relatively low costs. However, such technique cannot be applied to making components with complex geometries in fiber-reinforced composite materials with continuous fibers, which can only be produced, instead, by means of vacuum bagging, vacuum infusion and resin transfer molding techniques and curing in autoclave.

US 2014/272274 A1 describes a complex-shaped CMC component for gas turbine engine obtained by joining fibrous preforms obtained by shaping at least two fibrous preforms by pressing; inserting the first preform into the second preform; applying a reinforcement at the junction; consolidating by CVI infiltration; and densifying with a SiC slurry/Si melt infiltration process.

To date, in fact, components with complex geometries in fiber-reinforced polymer composite materials with continuous fibers -being obtainable only using vacuum bagging, vacuum infusion or resin transfer molding technique - cannot offer mechanical characteristics comparable to those of components obtained with compression molding techniques.

Thus, the need is felt to make components also with highly complex geometries in fiber-reinforced composite materials with continuous fibers, having high mechanical characteristics.

### Presentation of the invention

Therefore, it is the object of the present invention to eliminate, or at least reduce, the above problems, relating to the prior art, providing a method for making a preform in a fiber-reinforced composite material with continuous fibers also having a highly complex geometry and, at the same time, having mechanical characteristics, which are superior to a similar preform obtained with known techniques.

### Description of the drawings

The technical features of the invention may be clearly found in the contents of the claims presented below and the advantages thereof will become more apparent from the following detailed description, made with reference to the accompanying drawings, which show one or more embodiments thereof, given purely by way of non-limiting examples, in which:
- Figure 1a shows a block diagram of the method for making a preform in a fiber-reinforced composite material with complex geometry, according to a general embodiment of the invention, indicating some optional steps;
- Figure 1b shows a block diagram of three methods for making components, with a complex geometry, in a fiber-reinforced polymer material, in a fiber-reinforced C/C material or in a fiber-reinforced CMC material respectively, starting from a preform in fiber-reinforced polymer composite material according to the invention;
- Figures 2a-f show examples of preform sections with a complex geometry, which can be obtained using the method according to the present invention;
- Figure 3 shows an example of interlocking structures, which can be used in the method according to the invention in a piece assembly step c);
- Figure 4 shows an example of a structure obtained using the method according to the present invention, with junction areas between two pieces consolidated by means of applications of fibrous substrates using the vacuum bagging or vacuum infusion technique, for example; and
- Figure 5 shows a drawing of a flap of a space ship, obtainable in a fiber-reinforced ceramic composite material, having a predefined complex geometry, obtainable by infiltration with silicon of a preform obtained using the method according to the invention.

### Detailed description

The present invention relates to a method for making a preform in a fiber-reinforced composite material with continuous fibers, said preform having a predefined complex geometry.

A "preform with complex geometry" is generally understood to mean an object whose geometry comprises one or more undercuts. In other words, "complex geometry" is understood to mean a geometry, which cannot be ascribed to a planar or substantially planar shape, or to a slightly curved shape. In the context of the present invention, a "preform with complex geometry" is generally understood to mean a preform, which cannot be obtained directly by means of a forming technique by compression molding.

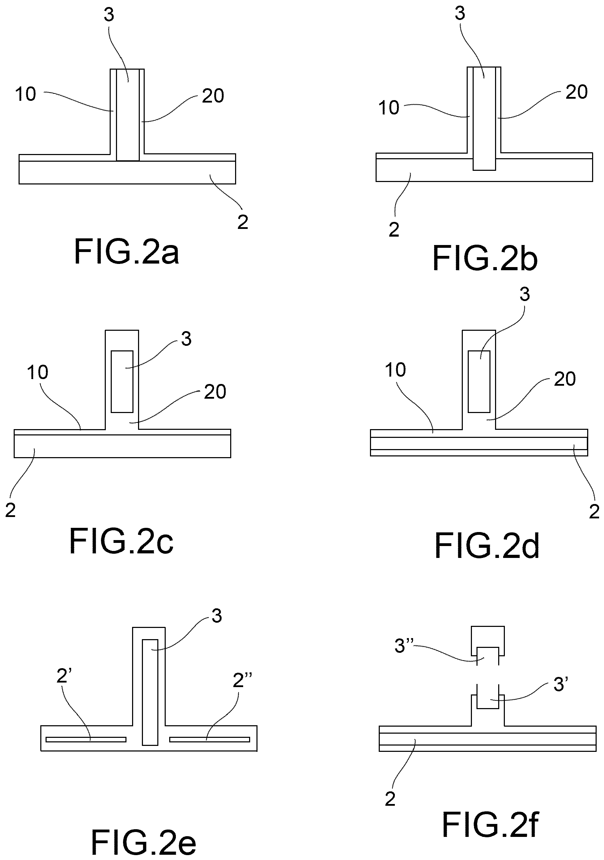

Some examples of preform sections with a complex geometry (T section) are shown in Figures 2a - f.

Other examples of preforms with a complex geometry can be T-section, L-section and V-section bodies, hollow objects, such as turbine blades, plane wings or flaps, pistons for engines, calipers for cars.

According to one general embodiment of the present invention, the method for making a preform in a fiber-reinforced composite material, wherein said preform has a predefined complex geometry, comprises a step a) of forming, by means of the technique of compression molding, one or more sheets of a fiber-reinforced composite material.

Advantageously, said one or more sheets of a fiber-reinforced composite material can have any shape chosen among the shapes obtainable using the technique of compression molding. In particular, such sheets can have a planar or substantially planar shape, or a slightly curved shape. The limits to the shape of such sheets is dictated solely by the technological limits of the compression molding technique used.

The compression molding technique is well-known to those skilled in the art and therefore will not be described in detail. We only recall that the sheets obtained in the aforesaid forming step a) by means of the compression molding technique consist of a plurality of pre-peg layers overlapping one another and connected to one another by a polymer matrix, which is formed during, and by means of, axial compression at the cross-linking temperatures of one or more binder resins present in said pre-pregs. The pre-pregs used to form said sheets in said forming step a) by means of the compression molding comprise continuous fibers, impregnated with a matrix of said one or more binder resins.

After the forming step a), the method comprises an operating step b) of shaping, from said one or more sheets in a fiber-reinforced composite material, a plurality of pieces.

The specific shape and size of each of such pieces are chosen so that together such plurality of pieces can define, at least partially, the predefined complex geometry to be obtained.

Operatively, the complex geometry of the preform to be made is divided into simpler geometry parts, each obtainable by means of the compression molding technique. Advantageously, the division of the complex geometry into simpler geometry parts can be carried out in an automated manner by means of computer aided techniques.

The forming step a) can be exploited directly to make the pieces with the chosen shapes and size. However, it is operatively simpler to envisage a specific step b) of shaping the pieces from raw sheets.

After the operating shaping step b), the method comprises an operating step c) of assembling said pieces to one another, to form a structure having a geometry corresponding, at least in part, to the predefined complex geometry of the preform to be made.

Advantageously, as will be set out below in the description, the assembly of the single pieces to one another does not necessarily require a direct contact between the single pieces. In fact, the assembly step c) is aimed at arranging the single pieces in the positions assigned within a structure, which must reproduce, at least partially, the complex geometry of the preform to be obtained.

After the operating assembly step c) of assembling the pieces, the method comprises a step d) of consolidating the structure, thus obtained, by means of the vacuum bagging, vacuum infusion or resin transfer molding technique, by applying fibrous substrates in laminar form to said structure at least in predefined portions thereof.

The application of such fibrous substrates in laminar form is functional for:
- completing the geometry of the structure according to the predefined complex geometry of the preform to be obtained; and/or
- reinforcing such structure.

At the end of said consolidation step d) a consolidated structure is obtained, which constitutes the final preform with a predefined complex geometry.

If the consolidation step d) is carried out using the vacuum bagging or vacuum infusion technique, optionally, it can be followed by a step e) of treating the aforesaid consolidated structure in autoclave at a predefined pressure.

In particular, in such step e) of treatment in autoclave, the consolidated structure is subjected to a pressure from 2 to 15 bar.

The vacuum bagging, vacuum infusion and resin transfer molding techniques are techniques which are known in themselves to those skilled in the art and thus will not be described herein.

Herein, we only recall that the vacuum bagging and vacuum infusion techniques comprise both the use of a flexible film, which can be used to completely envelop the materials to be subjected to forming or to cover such materials arranged inside a mold. The flexible film creates a sealed environment around the parts to be formed. Therefore, operatively, the vacuum is created inside said sealed environment, so that the flexible film - under the force of the atmospheric pressure - compresses the materials inside, determining the forming thereof. During the forming, there is also the curing of the material according to the operating conditions with which the forming is carried out. Then, this is followed by a treatment step in an autoclave, wherein the assembled product, thus obtained, is subjected to a predefined pressure, preferably between 2 and 15 bar.

The vacuum infusion technique essentially differs from the vacuum bagging technique in that formable materials (for example, resins) are injected during the vacuum forming.

The resin transfer molding technique is similar to the vacuum infusion technique in that it also envisages the injection of formable materials inside a sealed chamber. In the case of resin transfer molding, the injection of the formable materials is carried out at a high pressure (and not under vacuum); furthermore, the injection chamber is defined by a rigid mold and not by a flexible film.

Therefore, in the case where the vacuum bagging technique is used in the consolidation step d), the aforesaid fibrous substrates in laminar form are already impregnated with one or more binder resins, i.e. they consist of pre-pregs. In the case where, in the consolidation step d), the vacuum infusion or resin transfer molding technique is used, the aforesaid fibrous substrates in laminar form are devoid of binder resins, which are injected, instead, into the site of application during execution of the consolidation technique.

In the case of applying the resin transfer molding technique, the pieces obtained by compression molding and the fibrous substrates are arranged inside a mold, having the geometry of the preform to be obtained.

In the case of applying the vacuum bagging or vacuum infusion technique, the pieces obtained by compression molding and the fibrous substrates are wrapped inside the flexible film. In this case, the final shape of the preform is obtained by the mutual arrangement between the pieces (obtained by compression molding) and the fibrous substrates.

Preferably, in this particular case of using the vacuum bagging or vacuum infusion technique, the flexible film completely envelops the structure of the pieces and the fibrous substrates applied thereto.

Advantageously, in some specific cases, for example, in the case where the fibrous substrates have to be applied only to some portions of the structure, the flexible film may not completely envelop the structure of the pieces, but only be connected to the portions of the structure to which the reinforcing substrates have to be applied. Thus, in this case, the structure acts as a mold, while the fibrous substrates are applied between the structure and the flexible film.

Thus, in the light of the above, it is apparent that the forming method according to the invention allows the advantages linked to the technique of compression molding (principally, forming components with high mechanical resistance) to be combined with the advantages linked to the techniques of vacuum bagging, vacuum infusion and resin transfer molding (principally, forming complex parts).

In fact, the preforms in a fiber-reinforced composite material obtained using the method according to the invention can have complex geometries, which cannot be obtained by means of compression molding, despite having characteristics of mechanical resistance, which can only be obtained by compression molding.

Advantageously, the application of the fibrous substrates, in laminar form, can be carried out according to different geometries and different applications of the continuous fibers, which are chosen as a function of the mechanical characteristics desired to be obtained in the final preform.

Likewise, also the pieces obtained by compression molding can be arranged inside the aforesaid structure conveniently selecting the orientation of the fibers present in the single pieces with respect to the position inside the structure, as a function of the mechanical characteristics desired to be obtained in the final preform.

Thus, the forming method according to the invention not only allows the advantages linked to the technique of compression molding to be combined with the advantages linked to the techniques of vacuum bagging, vacuum infusion and resin transfer molding, but it also allows to make preforms, which can have mechanical characteristics which differ from portion to portion, as a function of the final use of the preform.

Advantageously, in the aforesaid assembly step c) at least some of the pieces obtained by compression molding can be arranged in mutual contact at direct junction areas. Examples of such situation are schematically illustrated in Figures 2a and 2b.

Advantageously, in such situation, in the consolidation step d) part of the aforesaid fibrous substrates can be applied to the structure as reinforcing elements overlapping the pieces at one or more of said direct junction areas.

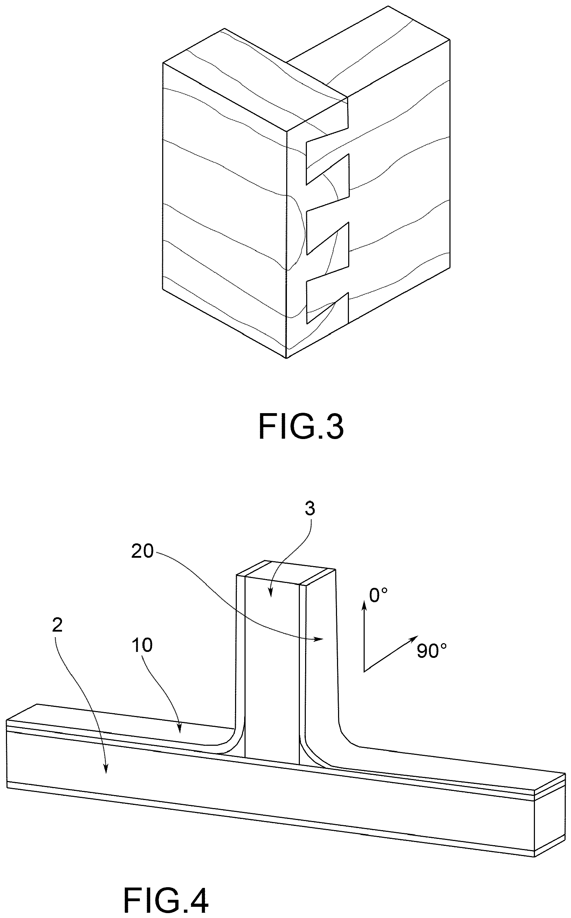

In Figure 4 it is shown a T-junction diagram reinforced by means of reinforcing laminar fibrous substrates, which adhere to both of the jointed pieces (in the form of panels). The preform is denoted with 1; the two joined pieces are denoted with 2 and 3 respectively, while the reinforcing fibrous substrates with 10 and 20 respectively.

Preferably, the direct junction between the pieces arranged in mutual contact can be obtained through a bond of the mechanical type between the pieces, preferably a shape coupling connection with interlocking of the pieces.

One possible mode of joining the pieces in mutual contact can envisage the creation of interlocking structures, such as dovetail structures, for example, with methods similar to those used in the wood industry, as shown, for example, in Figure 3. However, simple junctions of the type without interlocking, as shown in Figure 4, can also be envisaged.

Advantageously, the direct junction between the pieces arranged in mutual contact can be obtained through a connection by means of one or more binder resins or glues. The connection with glues can be envisaged as an alternative to the bond of the mechanical type. Preferably, the connection with glues is envisaged in conjunction with the bond of the mechanical type. In other words, the interlocking structures between the pieces are reinforced by means of binder resins.

Advantageously, in the aforesaid assembly step c) at least some of the pieces obtained by compression molding can be arranged to form adjacent portions of the aforesaid structure, but without being placed in direct contact with one another, thus leaving gap areas in the structure. In the aforesaid consolidation step d) part of said fibrous substrates in laminar form are applied as elements for filling such gap areas and as junction elements between adjacent pieces, which are not in direct contact with one another. Examples of such situation are schematically illustrated in Figures 2c and 2d.

Advantageously, in the aforesaid consolidation step d), the aforesaid fibrous substrates in laminar form can be applied to the structure as partial or complete coating elements for one or more of the pieces obtained by compression molding, thus, the latter being at least partially embedded in said fibrous substrates. Examples of such situation are schematically illustrated in Figures 2d and 2e.

According to a particular embodiment of the present invention, the structure obtained by assembling the aforesaid pieces to one another can completely define the complex geometry of the preform to be obtained. Such situation is schematically illustrated in Figures 2a and 2b, in which the fibrous substrates 10, 20 essentially perform a function of reinforcing the junction area between the two components 2 and 3 obtained by compression molding.

According to an alternative embodiment, the structure obtained by assembling the aforesaid pieces to one another - in one or more of the portions thereof - may not completely define the complex geometry of the preform to be obtained. Such situation is schematically illustrated in Figures 2c to 2f, in which the fibrous substrates 10, 20 contribute to defining the geometry of the preform, completing the gaps between the pieces 2, 2', 2", 3, 3', 3" obtained by compression molding. This can be envisaged, for example, in the case where it is not necessary for the final preform to have, in each portion thereof, characteristics with high mechanical resistance, obtainable only by forming of compression molding.

Thus, there may be cases where the final preform is almost completely made by means of fibrous substrates formed using the vacuum bagging, vacuum infusion or resin transfer molding technique and where the pieces obtained by compression molding constitute only the reinforcing inserts placed in specific portions of the preform. Such situation is schematically illustrated, for example, in Figure 2e.

As highlighted previously, the sheets obtained in the aforesaid forming step a) by means of the compression molding technique consist of a plurality of pre-peg layers overlapping one another and connected to one another by a polymer matrix, which is formed during and by means of axial compression at the crosslinking temperatures of one or more binder resins present in said pre-pregs. The pre-pregs used to form said sheets in said forming step a) by means of compression molding comprise continuous fibers impregnated with a matrix of said one or more binder resins.

Preferably, the continuous fibers can have specific orientations inside the sheets.

Advantageously, the shaping of the pieces from the sheets can be carried out so that the pieces have specific fiber orientations and thus they can give the preforms specific mechanical characteristics in the portions where such pieces are inserted.

Advantageously, the binder resins of the pre-pregs used to obtain the aforesaid sheets can be of a various type, and they are chosen as a function of the mechanical and physical characteristics of the pieces, to be obtained by the shaping of the sheets.

In particular, the aforesaid one or more binder resins can be selected from the resins, which take high mechanical and/or thermal characteristics in the polymer state. In this case, preferably, said one or more binder resins can be resins selected from the group consisting of epoxy, silicone, phenolic and cyanate ester resins.

The aforesaid one or more binder resins can be selected from the high carbon yield resins resulting from pyrolysis. In this case, preferably, said one or more binder resins are resins selected from the group consisting of phenolic, silicone, cyanate ester and furan resins.

Advantageously, the pieces (obtained by compression molding) can be assembled to one another without undergoing any subsequent treatment after the shaping step b) .

Alternatively, the pieces (obtained by compression molding) can be subjected to treatments which modify the characteristics thereof before the shaping step b) or before the assembly step c), as will be resumed below.

Advantageously, it is possible to assemble pieces with a different composition and mechanical characteristics. In particular, it is possible to differentiate the characteristics of the pieces, both in terms of the material used and in terms of the type of treatment sustained by the piece. Differentiation can be carried out, for example, as a function of the portion of the structure, which the single piece is intended to define.

Advantageously, the method can comprise a step f) of thermally treating at least a part of said sheets or said pieces shaped from said sheets before assembling them to one another in said assembly step c), in order to obtain a total or partial post-curing of said one or more binder resins. Such treatment step f) is aimed at inducing the total or partial curing of said one or more binder resins present in the pre-peg layers, which form the pieces obtained by the cutting of said sheets. By differentiating the level of thermal treatment of the single pieces it is possible to differentiate the relative physical and mechanical characteristics.

Advantageously, the method can comprise a pyrolyzing step g) for pyrolyzing at least a part of said sheets or said pieces shaped from said sheets before assembling them to one another in said assembly step c), in order to decompose said one or more binder resins into carbon composites. In this case too, by controlling the pyrolysis treatment, it is possible to differentiate the level of pyrolysis of the single pieces, thus obtaining pieces characterized by different levels of porosity.

Advantageously, the method can also comprise a step h) of densifying, with carbon, at least a part of the sheets or pieces subjected to said pyrolysis step g), before assembling them to one another in said assembly step c). Thereby, it is possible, for example, to obtain pieces (obtained by compression molding) in a carbon-carbon material at different densification stages (for example, from 0.7 g/cm3 to 1.8 g/cm3).

In particular, densification can be carried out using the CVI (Chemical Vapor Infiltration) technique and/or the PIP (Polymer Impregnation and Pyrolysis) technique.

Advantageously, densification can be carried out in a differentiated manner from piece to piece. Thereby, in the case where the preform in a fiber-reinforced composite material is intended to be subjected to a subsequent infiltration with molten silicon, it is possible to vary the ratio between C, SiC, Si from portion to portion in the thus obtained final piece in a fiber-reinforced ceramic composite material.

Advantageously, the method can also comprise a step i) of infiltrating, with molten silicon, at least a part of the sheets or pieces subjected to said pyrolysis step g), before assembling them to one another in said assembly step c). Thereby, it is possible, for example, to make pieces (obtained by compression molding) in a ceramic material.

In particular, the infiltration with silicon can be carried out using the LSI (Liquid Silicon Infiltration) technique.

By way of example, due to the method according to the invention, it is possible to make a preform in a fiber-reinforced polymer material, which is provided, in some specific points, with "inserts/pieces" in a fiber-reinforced carbon-carbon composite material at different stages of densification or in a fiber-reinforced ceramic composite material. Such "inserts/pieces" in materials different from the fiber-reinforced polymer material, which mainly form the preform, can be envisaged in areas of the preform, which, in use, must ensure a greater thermal resistance, such as areas of contact with sources of heat, for example.

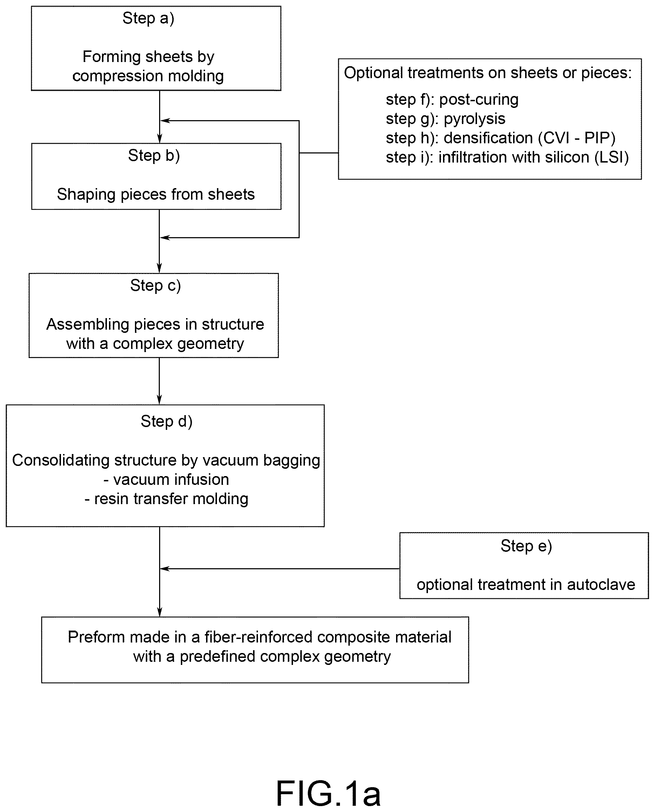

The general diagram of the method for making a preform in a fiber-reinforced composite material with continuous fibers is shown in Figure 1a.

According to a preferred embodiment of the invention, the pieces obtained by cutting the aforesaid sheets obtained by compression molding are subjected to pyrolysis before the assembly thereof. This increases the assembly stability of the pieces, how it will be clarified in the description below:
- the pyrolyzed material is porous and therefore it favors the adhesion of the glue and/or of the pre-pegs with which it comes into contact in the assembly step c) and consolidation step d);
- the single pyrolyzed pieces have already undergone the expansions and shrinkages, which take place in the molded composite during pyrolysis; therefore, the preform, thus obtained, will be less subject to stress and thermal deformations.

Preferably, the aforesaid one or more binder resins or glues, which can be used for connecting the pieces to one another in mutual contact, are high carbon yield resins resulting from pyrolysis.

The high carbon yield is necessary for ensuring the preservation of a good consistency of the junction following a possible pyrolysis treatment. In fact, as will be resumed below further on in the description, advantageously, the preforms in a fiber-reinforced composite material obtained using the method according to the invention can be subjected to infiltration with molten silicon (by means of the LSI, Liquid Silicon Infiltration technique) to transform them into a fiber-reinforced ceramic composite material or they can be densified with carbon material to transform them into a CC (Carbon-Carbon). Preferably, such treatments (infiltration and densification) require a preventive pyrolysis aimed at generating a sufficient porosity for the infiltration of the molten silicon and deposition of carbon materials.

Preferably, the aforesaid one or more binder resins or glues, which can be used to connect the pieces to one another in mutual contact, are selected from the group consisting of phenolic, silicone and furan resins.

Advantageously, such one or more binder resins or glues can be loaded with powders of ceramic material, graphite and/or coke. The presence of ceramic powders allows improved adhesion of the parts after pyrolysis regulating shrinkage phenomena.

Advantageously, the binder resins, which impregnate the fibrous substrates (pre-pregs) applied using the vacuum bagging technique, as well as the binder resins applied using the vacuum infusion and resin transfer molding technique are selected as a function of the fiber-reinforced composite material with which the final preform, with a predefined complex geometry, is desired to be obtained.

In particular, the aforesaid one or more binder resins can be selected from the resins, which take high mechanical characteristics also after forming. In this case, preferably, said one or more binder resins can be resins selected from the group consisting of epoxy, silicone, cyanate ester and phenolic resins.

Such choice is made in the case where the preform is used directly in the final state obtained after treatment in autoclave, i.e. it is used as a preform in a fiber-reinforced polymer material.

In this case, the final preform with a complex geometry will be made in a fiber-reinforced polymer material, comprising one or more inserts consisting of pieces obtained by compression molding and, possibly subjected to post-curing, pyrolysis and densification treatments.

Alternatively, the aforesaid one or more binder resins can be selected from the high carbon yield resins resulting from pyrolysis. In this case, preferably, said one or more binder resins are resins selected from the group consisting of phenolic, silicone and furan resins. Such choice is carried out in the particular case where the final preform is not used directly in the final state obtained after the consolidation step d), but it is intended to be subjected to pyrolysis and subsequent infiltration with molten silicon or densification with carbon.

Advantageously, as described previously, a preform in a fiber-reinforced composite material with continuous fibers can be used to make a component in a fiber-reinforced carbon-carbon polymer composite material, or in a fiber-reinforced ceramic composite material, having the complex geometry of such a preform.

In particular, to obtain such components, the preform can be subjected to mechanical processings.

As highlighted previously, the preform in a fiber-reinforced polymer composite material with continuous fibers can contain pieces/inserts in C/C or CMC.

A method for making a component in a fiber-reinforced ceramic composite material, having a predefined complex geometry, is also an object of the present invention.

Such method comprises the following operating steps:
- making a preform in a fiber-reinforced composite material having the predefined complex geometry of the component to be made following the method of making a preform according to the invention, and in particular as described above;
- pyrolyzing said preform so as to render it porous;
- infiltrating with liquid silicon said preform rendered porous so as to obtain said component made in a fiber-reinforced ceramic composite material (CCM) with said predefined complex geometry.

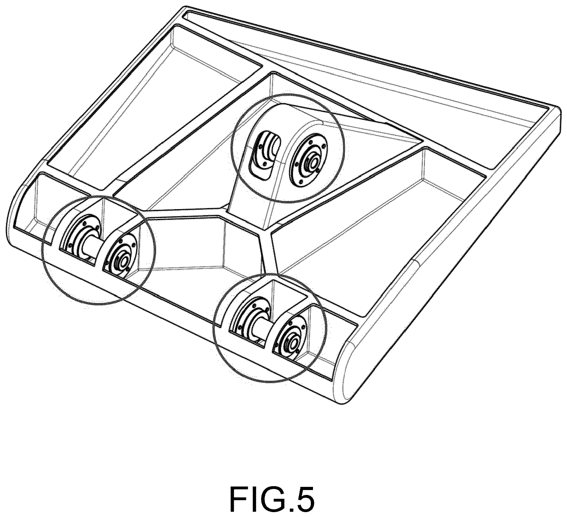

Figure 5 shows a drawing of a flap of a space ship, obtainable in a fiber-reinforced ceramic composite material, having a predefined complex geometry, obtainable by infiltration with silicon of a preform obtained with the method according to the invention. The flap portions obtained using the forming techniques according to the invention, which allowed the assembly of different materials, are highlighted with circles in Figure 5.

As said previously, the use of high carbon yield resins resulting from pyrolysis (particularly, phenolic, silicone and furan resins or other polymers with a high carbon yield, e.g. PEEK) in particular, close to the junctions between the pieces, has the object of obtaining a pyrolysis residue suitable to guarantee a good consistency of the structure before infiltration.

Advantageously, the method can comprise a step of densifying the aforesaid preform, rendered porous. Such densification step is carried out before the infiltration step and it can be aimed, in particular, at reinforcing the preform before infiltration with molten silicon.

Advantageously, densification can be carried out in a differentiated manner from portion to portion of the preform. Thereby, following infiltration with molten silicon of the preform obtained, it is possible to vary the ratio between C SiC Si from portion to portion in the final piece thus obtained, made in a fiber-reinforced ceramic composite material.

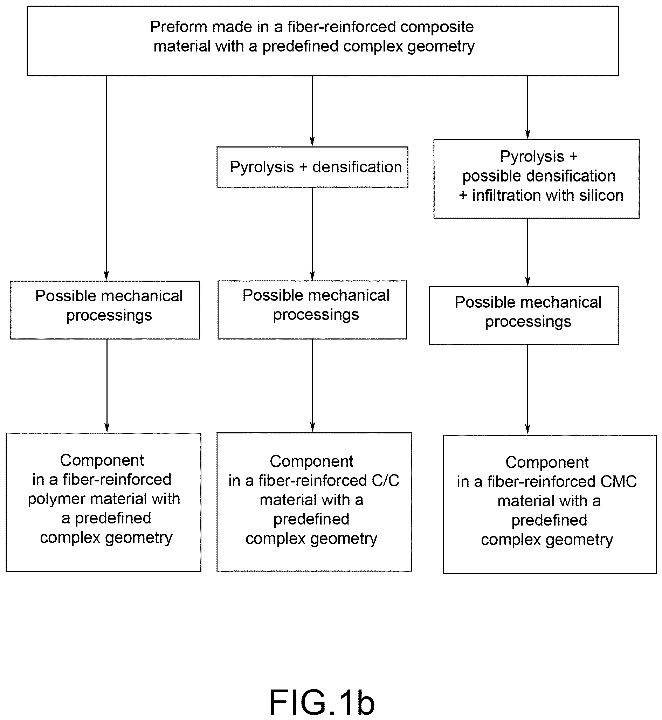

The general diagram of such method for making a component in a fiber-reinforced CMC material with a complex geometry is shown in Figure 1b.

A method for making a component in a carbon-carbon (CC) material, having a predefined complex geometry, is a further object of the present invention.

Such method comprises the following operating steps:
- making a preform in a fiber-reinforced composite material having the predefined complex geometry of the component to be made following the method of making a preform according to the invention, and in particular, as described above;
- pyrolyzing said preform so as to render it porous;
- densifying, with carbon, said preform rendered porous, so as to obtain said component in a carbon-carbon composite material (CC) with said predefined complex geometry.

The general diagram of such method for making a component in a fiber-reinforced C/C material with a complex geometry is shown in Figure 1b.

Therefore, the invention, thus conceived, achieves the preset objects.

Obviously, in the practical embodiment thereof, it may also take other shapes and configurations different from the one shown above, without thereby departing from the present scope of protection, as defined in the appended claims.

## Claims

1. A method for making a preform in a fiber-reinforced composite material with continuous fibers, said preform having a predefined complex geometry, said method comprising the following steps:
a) forming by compression molding technique one or more sheets of a fiber-reinforced composite material;
b) shaping from said one or more sheets in a fiber-reinforced composite material a plurality of pieces (2, 2', 2", 3, 3', 3"), the specific dimensions and shape of each of said pieces (2, 2', 2", 3, 3', 3") being chosen so that together said plurality of pieces (2, 2', 2", 3, 3'; 3") can define at least partially the predefined complex geometry of said preform;
c) assembling said pieces (2, 2', 2", 3, 3', 3") together to form a structure having a geometry corresponding at least in part to the predefined complex geometry of the preform to be made;
d) consolidating said structure by means of vacuum bagging, vacuum infusion or resin transfer molding technique by applying fibrous substrates (10, 20) in laminar form to said structure, at least in predefined portions thereof to complete its geometry according to said predefined complex geometry and/or to reinforce said structure, thereby obtaining a consolidated structure that constitutes said preform with said predefined complex geometry.

2. Method according to claim 1, wherein in said assembly step c) at least some of said pieces (2, 3) are arranged in mutual contact with each other at direct junction zones, wherein preferably in said consolidation step d) part of said fibrous substrates (10, 20) are applied to said structure as overlapping reinforcing elements on said pieces (2, 3) at one or more of said direct junction zones.

3. Method according to one or more of the preceding claims, wherein in said assembly step c) at least some of said pieces (2, 2', 2", 3, 3', 3") are arranged to form adjacent portions of said structure without however being placed in direct contact with each other thereby leaving gap zones in said structure, in said consolidation step d) part of said fibrous substrates in laminar form being applied as filling elements of said gap zones and as junction elements between said adjacent pieces (2, 2', 2", 3, 3', 3") not in direct contact with each other.

4. Method according to one or more of the preceding claims, wherein in said consolidation step d) said fibrous substrates (10, 20) in laminar form are applied on said structure as partial or complete coating elements of one or more of said pieces (2, 2', 2", 3, 3', 3"), the latter thus being at least partially embedded in said fibrous substrates (10, 20).

5. Method according to one or more of the preceding claims, wherein said sheets obtained in said forming step a), from which said pieces (2, 2', 2", 3, 3', 3") are obtained after the shaping step b), consist of a plurality of pre-preg layers superposed on each other and connected to each other by a polymer matrix that is formed during and by means of axial pressing at the crosslinking temperature of one or more binder resins present in said pre-pregs, wherein the pre-pregs used to form said sheets in said forming step a) comprise continuous fibers, impregnated with a matrix of said one or more binder resins.

6. Method according to claim 5, wherein said one or more binder resins are resins selected from the group consisting of epoxy, silicone, phenolic, cyanate ester and furan resins.

7. Method according to claim 5 or 6, wherein said pieces may be subjected to one or more heat treatments, preferably selected from:
- a post-curing step (f);
- a pyrolysis step (g);
- a step (h) of carbon densification; and/or
- a step i) infiltration with molten silicon.

8. Method according to one or more of the preceding claims, wherein in said assembly step c) at least some of said pieces (2, 3) are arranged in mutual contact with each other at direct junction areas and wherein said mutual contact is obtained by means of:
- a mechanical connection between said pieces, preferably a shape coupling connection with interlocking of the pieces; and/or
- a bond by means of one or more binder resins or glues, wherein preferably said one or more binder resins or glues are high carbon yield resins resulting from pyrolysis, even more preferably said one or more binder resins or glues being selected from the group consisting of phenolic, silicone, cyanate ester and furan resins.

9. Method according to claim 8, wherein said one or more binder resins or glues are loaded with powders of ceramic material, graphite and/or coke.

10. Method according to one or more of the preceding claims, wherein said consolidation step d) is carried out using vacuum bagging technique, applying on said structure fibrous substrates (10, 20) consisting of pre-pregs comprising continuous fibers, and impregnated with a matrix of one or more binder resins.

11. Method according to one or more of the claims from 1 to 9, wherein said consolidation step d) is carried out using the vacuum infusion or resin transfer molding technique, applying on said structure fibrous substrates (10, 20) comprising continuous fibers, not impregnated with a matrix of one or more binder resins, during said consolidation step c) one or more binder resins being applied at the application site of said fibrous substrates (10, 20).

12. Method according to claim 10 or 11, wherein said one or more binder resins are resins selected from the group consisting of epoxy, silicone, phenolic, cyanate ester and furan resins.

13. Method according to one or more of the preceding claims, comprising a step e) of treating in autoclave said consolidated structure at a predefined pressure, preferably between 2 and 15 bar, and more preferably between 3 and 10 bar.

14. A method for making a component in a fiber-reinforced ceramic composite material with continuous fibers, said component having a predefined complex geometry, said method comprising the following operating steps:
- making a preform in a fiber-reinforced composite material having the predefined complex geometry of the component to be made following the method of making a preform according to one or more of the preceding claims;
- pyrolyzing said preform so as to render it porous;
- infiltrating with liquid silicon said preform rendered porous so as to obtain said fiber-reinforced ceramic composite material component with said predefined complex geometry.

15. Method according to claim 14, comprising a step of densifying with carbon said preform rendered porous, to be carried out before said infiltration step.

16. A method for making a component in a fiber-reinforced carbon-carbon, composite material with continuous fibers, said component having a predefined complex geometry, said method comprising the following operating steps:
- making a preform of a fiber-reinforced composite material having the predefined complex geometry of the component to be made following the method of making a preform according to one or more of claims 1 to 13;
- pyrolyzing said preform so as to render it porous;
- densifying with carbon said preform rendered porous, so as to obtain said component in a fiber-reinforced carbon-carbon composite material with continuous fibers with said predefined complex geometry.

## Patentansprüche

1. Verfahren zur Herstellung eines Vorformlings aus einem faserverstärkten Verbundmaterial mit Endlosfasern, wobei der Vorformling eine vordefinierte komplexe Geometrie aufweist, wobei das Verfahren die folgenden Schritte umfasst:
a) Formen einer oder mehrerer Platten aus einem faserverstärkten Verbundmaterial durch Formpressen;
b) Formen einer Vielzahl von Teilen (2, 2', 2", 3, 3', 3") aus der einen oder den mehreren Platten aus faserverstärktem Verbundmaterial, wobei die spezifischen Abmessungen und die Form jedes der Teile (2, 2', 2", 3, 3', 3") derart gewählt werden, dass die Vielzahl von Teilen (2, 2', 2", 3, 3', 3") zusammen wenigstens teilweise die vordefinierte komplexe Geometrie des Vorformlings definieren können;
c) Zusammenfügen der Teile (2, 2', 2", 3, 3', 3") zum Bilden einer Struktur, deren Geometrie wenigstens teilweise der vordefinierten komplexen Geometrie des herzustellenden Vorformlings entspricht;
d) Verfestigen der Struktur mittels Vakuumaufbau-, Vakuuminfusions- oder Harztransferformtechnik durch Aufbringen von Fasersubstraten (10, 20) in laminarer Form auf die Struktur, wenigstens in vordefinierten Abschnitten daran, um ihre Geometrie gemäß der vordefinierten komplexen Geometrie zu vervollständigen und/oder um die Struktur zu verstärken, wodurch eine verfestigte Struktur erhalten wird, die den Vorformling mit der vordefinierten komplexen Geometrie bildet.

2. Verfahren nach Anspruch 1, wobei in dem Montageschritt c) wenigstens einige der Teile (2, 3) an direkten Verbindungszonen in gegenseitigem Kontakt miteinander angeordnet werden, wobei bevorzugt in dem Verfestigungsschritt d) ein Teil der Fasersubstrate (10, 20) als überlappende Verstärkungselemente an den Teilen (2, 3) an einer oder mehreren der direkten Verbindungszonen auf die Struktur aufgebracht werden.

3. Verfahren nach einem oder mehreren der vorhergehenden Ansprüche, wobei in dem Montageschritt c) wenigstens einige der Teile (2, 2', 2", 3, 3', 3") derart angeordnet werden, dass sie benachbarte Abschnitte der Struktur bilden, ohne jedoch in direkten Kontakt miteinander gebracht zu werden, wodurch Lückenbereiche in der Struktur verbleiben, wobei in dem Verfestigungsschritt d) ein Teil der Fasersubstrate in laminarer Form als Füllelemente der Lückenbereiche und als Verbindungselemente zwischen den benachbarten Teilen (2, 2', 20, 2", 3, 3', 3"), die keinen direktem Kontakt miteinander haben, angebracht werden.

4. Verfahren nach einem oder mehreren der vorhergehenden Ansprüche, wobei in dem Verfestigungsschritt d) die Fasersubstrate (10, 20) in laminarer Form auf die Struktur als teilweise oder vollständige Beschichtungselemente eines oder mehrerer der Stücke (2, 2', 2", 3, 3', 3") aufgebracht werden, wobei letztere somit wenigstens teilweise in die Fasersubstrate (10, 20) eingebettet werden.

5. Verfahren nach einem oder mehreren der vorhergehenden Ansprüche, wobei die in dem Formgebungsschritt a) erhaltenen Platten, aus denen die Stücke (2, 2', 2", 3, 3', 3") nach dem Formgebungsschritt b) erhalten werden, aus einer Vielzahl von Pre-Preg-Schichten bestehen, die übereinander liegen und miteinander durch eine Polymermatrix verbunden sind, die während und mittels axialem Pressen bei der Vernetzungstemperatur eines oder mehrerer Bindemittelharze, die in den Pre-Pregs vorhanden sind, gebildet wird, wobei die Pre-Pregs, die verwendet werden, um die Platten in dem Formungsschritt a) zu bilden, kontinuierliche Fasern umfassen, die mit einer Matrix des einen oder der mehreren Bindemittelharze imprägniert sind.

6. Verfahren nach Anspruch 5, wobei das eine oder die mehreren Bindemittelharze Harze sind, die aus der Gruppe gewählt sind, umfassend Epoxid-, Silikon-, Phenol-, Cyanatester- und Furanharze.

7. Verfahren nach Anspruch 5 oder 6, wobei die Teile einer oder mehreren Wärmebehandlungen unterzogen werden können, bevorzugt gewählt aus:
- einem Nachhärtungsschritt (f);
- einem Pyrolyse-Schritt (g);
- einem Schritt (h) der Kohlenstoffverdichtung; und/oder
- einem Schritt (i) der Infiltration mit geschmolzenem Silizium.

8. Verfahren nach einem oder mehreren der vorhergehenden Ansprüche, wobei in dem Montageschritt c) wenigstens einige der Teile (2, 3) in gegenseitigem Kontakt miteinander an direkten Verbindungsbereichen angeordnet sind und wobei der gegenseitige Kontakt erhalten wird durch:
- eine mechanische Verbindung zwischen den Teilen, bevorzugt eine formschlüssige Verbindung mit Verriegelung der Teile; und/oder
- eine Bindung mittels eines oder mehrerer Bindemittelharze oder Klebstoffe, wobei das eine oder die mehreren Bindemittelharze oder Klebstoffe bevorzugt Harze mit hoher Kohlenstoffausbeute sind, die aus der Pyrolyse resultieren, wobei das eine oder die mehreren Bindemittelharze oder Klebstoffe stärker bevorzugt aus der Gruppe gewählt sind, umfassend Phenol-, Silikon-, Cyanatester- und Furanharze.

9. Verfahren nach Anspruch 8, wobei das eine oder die mehreren Bindemittelharze oder -leime mit Pulvern aus keramischem Material, Graphit und/oder Koks beladen sind.

10. Verfahren nach einem oder mehreren der vorhergehenden Ansprüche, wobei der Verfestigungsschritt d) unter Verwendung der Vakuumaufbautechnik durchgeführt wird, wobei auf die Strukturfasersubstrate (10, 20) aufgebracht wird, die aus Endlosfasern umfassenden Pre-Pregs bestehen und mit einer Matrix aus einem oder mehreren Bindemittelharzen imprägniert sind.

11. Verfahren nach einem oder mehreren der Ansprüche 1 bis 9, wobei der Verfestigungsschritt d) unter Verwendung der Vakuuminfusions- oder Harztransferformungstechnik durchgeführt wird, wobei auf die Strukturfasersubstrate (10, 20), die Endlosfasern umfassen und nicht mit einer Matrix aus einem oder mehreren Bindemittelharzen imprägniert sind, während des Verfestigungsschritts c) ein oder mehrere Bindemittelharze an der Applikationsstelle der Fasersubstrate (10, 20) aufgebracht werden.

12. Verfahren nach Anspruch 10 oder 11, wobei das eine oder die mehreren Bindemittelharze Harze sind, die aus der Gruppe gewählt sind, umfassend Epoxid-, Silikon-, Phenol-, Cyanatester- und Furanharze.

13. Verfahren nach einem oder mehreren der vorhergehenden Ansprüche, umfassend einen Schritt e) des Behandelns der verfestigten Struktur in einem Autoklaven bei einem vordefinierten Druck, bevorzugt zwischen 2 und 15 bar, und stärker bevorzugt zwischen 3 und 10 bar.

14. Verfahren zur Herstellung eines Bauteils aus einem faserverstärkten keramischen Verbundmaterial mit Endlosfasern, wobei das Bauteil eine vordefinierte komplexe Geometrie aufweist, wobei das Verfahren die folgenden Arbeitsschritte umfasst:
- Herstellen eines Vorformlings in einem faserverstärkten Verbundmaterial mit der vorgegebenen komplexen Geometrie des herzustellenden Bauteils nach dem Verfahren zur Herstellung eines Vorformlings nach einem oder mehreren der vorhergehenden Ansprüche;
- Pyrolysieren des Vorformlings, um ihn porös zu machen;
- Infiltrieren des porös gemachten Vorformlings mit flüssigem Silizium, um das Bauteil aus faserverstärktem keramischem Verbundmaterial mit der vordefinierten komplexen Geometrie zu erhalten.

15. Verfahren nach Anspruch 14, das einen Schritt des Verdichtens des porös gemachten Vorformlings mit Kohlenstoff umfasst, der vor dem Schritt des Infiltrierens durchgeführt wird.

16. Verfahren zur Herstellung eines Bauteils aus einem faserverstärkten Kohlenstoff-Kohlenstoff-Verbundmaterial mit Endlosfasern, wobei das Bauteil eine vordefinierte komplexe Geometrie aufweist und das Verfahren die folgenden Arbeitsschritte umfasst:
- Herstellen eines Vorformlings aus einem faserverstärkten Verbundmaterial mit der vorgegebenen komplexen Geometrie des herzustellenden Bauteils nach dem Verfahren zur Herstellung eines Vorformlings nach einem oder mehreren der Ansprüche 1 bis 13;
- Pyrolyse des Vorformlings, um ihn porös zu machen;
- Verdichten des porös gemachten Vorformlings mit Kohlenstoff, um das Bauteil in Form eines faserverstärkten Kohlenstoff-Kohlenstoff-Verbundmaterials mit Endlosfasern mit der vordefinierten komplexen Geometrie zu erhalten.

## Revendications

1. Procédé de fabrication d'une préforme dans un matériau composite renforcé par fibres avec des fibres continues, ladite préforme ayant une géométrie complexe prédéfinie, ledit procédé comprenant les étapes suivantes :
a) la formation par une technique de moulage par compression d'une ou plusieurs feuilles de matériau composite renforcé par fibres ;
b) le façonnage à partir desdites une ou plusieurs feuilles dans un matériau composite renforcé par fibres d'une pluralité de pièces (2, 2', 2", 3, 3', 3"), les dimensions spécifiques et la forme de chacune desdites pièces (2, 2', 2", 3, 3', 3") étant choisies de sorte que l'ensemble de ladite pluralité de pièces (2, 2', 2", 3, 3', 3") puisse définir au moins partiellement la géométrie complexe prédéfinie de ladite préforme ;
c) l'assemblage desdites pièces (2, 2', 2", 3, 3', 3") ensemble pour former une structure ayant une géométrie correspondant au moins en partie à la géométrie complexe prédéfinie de la préforme à fabriquer ;
d) la consolidation de ladite structure au moyen d'une technique de mise sous vide, de moulage par infusion sous vide ou par transfert de résine par application de substrats fibreux (10, 20) sous forme laminaire à ladite structure, au moins dans des portions prédéfinies de celle-ci pour compléter sa géométrie selon ladite géométrie complexe prédéfinie et/ou pour renforcer ladite structure, ce qui permet d'obtenir une structure consolidée qui constitue ladite préforme avec ladite géométrie complexe prédéfinie.

2. Procédé selon la revendication 1, dans lequel dans ladite étape d'assemblage c) au moins certaines desdites pièces (2, 3) sont agencées en contact mutuel les unes avec les autres au niveau de zones de jonction directe, dans lequel de préférence dans ladite étape de consolidation d) une partie desdits substrats fibreux (10, 20) sont appliqués à ladite structure comme éléments de renforcement se chevauchant sur lesdites pièces (2, 3) au niveau d'une ou plusieurs desdites zones de jonction directe.

3. Procédé selon une ou plusieurs des revendications précédentes, dans lequel dans ladite étape d'assemblage c) au moins certaines desdites pièces (2, 2', 2", 3, 3', 3") sont agencées pour former des portions adjacentes de ladite structure sans cependant être placées en contact direct les unes avec les autres ce qui permet de laisser des zones d'espace dans ladite structure, dans ladite étape de consolidation d) une partie desdits substrats fibreux sous forme laminaire étant appliqués comme éléments de remplissage desdites zones d'espace et comme éléments de jonction entre lesdites pièces adjacentes (2, 2', 2", 3, 3', 3") qui ne sont pas en contact direct les unes avec les autres.

4. Procédé selon une ou plusieurs des revendications précédentes, dans lequel dans ladite étape de consolidation d) lesdits substrats fibreux (10, 20) sous forme laminaire sont appliqués sur ladite structure comme éléments de revêtement partiel ou complet d'une ou plusieurs desdites pièces (2, 2', 2", 3, 3', 3"), la dernière étant ainsi au moins partiellement incorporée dans lesdits substrats fibreux (10, 20).

5. Procédé selon une ou plusieurs des revendications précédentes, dans lequel lesdites feuilles obtenues dans ladite étape de formation a), à partir desquelles lesdites pièces (2, 2', 2", 3, 3', 3") sont obtenues après l'étape de façonnage b), consistent en une pluralité de couches de pré-imprégné superposées les unes sur les autres et reliées les unes aux autres par une matrice polymère qui est formée pendant et au moyen d'un pressage axial à une température de réticulation d'une ou plusieurs résines liantes présentes dans lesdits pré-imprégnés, dans lequel les pré-imprégnés utilisés pour former lesdites feuilles dans ladite étape de formation a) comprennent des fibres continues, imprégnées avec une matrice desdites une ou plusieurs résines liantes.

6. Procédé selon la revendication 5, dans lequel une ou plusieurs résines liantes sont des résines sélectionnées dans le groupe constitué de résines époxydiques, silicones, phénoliques, d'ester de cyanate et furaniques.

7. Procédé selon la revendication 5 ou 6, dans lequel lesdites pièces peuvent être soumises à un ou plusieurs traitements thermiques, de préférence sélectionnés parmi :
- une étape de post-durcissement (f) ;
- une étape de pyrolyse (g) ;
- une étape (h) de densification au carbone ; et/ou
- une étape i) d'infiltration avec du silicium fondu.

8. Procédé selon une ou plusieurs des revendications précédentes, dans lequel dans ladite étape d'assemblage c) au moins certaines desdites pièces (2, 3) sont agencées en contact mutuel les unes avec les autres au niveau de zones de jonction directe et dans lequel ledit contact mutuel est obtenu au moyen :
- d'une liaison mécanique entre lesdites pièces, de préférence une liaison d'accouplement de forme avec emboîtement des pièces ; et/ou
- d'un lien au moyen d'une ou plusieurs résines liantes ou colles, dans lequel de préférence lesdites une ou plusieurs résines liantes ou colles sont des résines à haut rendement en carbone résultat d'une pyrolyse, de manière encore davantage préférée lesdites une ou plusieurs résines liantes ou colles étant sélectionnées dans le groupe constitué de résines phénoliques, silicones, d'ester de cyanate et furaniques.

9. Procédé selon la revendication 8, dans lequel lesdites résines liantes ou colles sont chargées avec des poudres de matériau céramique, de graphite et/ou de coke.

10. Procédé selon une ou plusieurs des revendications précédentes, dans lequel ladite étape de consolidation d) est effectuée à l'aide d'une technique de mise sous vide, appliquant sur ladite structure des substrats fibreux (10, 20) consistant en des pré-imprégnés comprenant des fibres continues, et imprégnés avec une matrice d'une ou plusieurs résines liantes.

11. Procédé selon une ou plusieurs des revendications 1 à 9, dans lequel ladite étape de consolidation d) est effectuée à l'aide de la technique de moulage par infusion sous vide ou par transfert de résine, appliquant sur ladite structure des substrats fibreux (10, 20) comprenant des fibres continues, non imprégnés avec une matrice d'une ou plusieurs résines liantes, pendant ladite étape de consolidation c) une ou plusieurs résines liantes étant appliquées au niveau d'un site d'application desdits substrats fibreux (10, 20).

12. Procédé selon la revendication 10 ou 11, dans lequel une ou plusieurs résines liantes sont des résines sélectionnées dans le groupe constitué de résines époxydiques, silicones, phénoliques, d'ester de cyanate et furaniques.

13. Procédé selon une ou plusieurs des revendications précédentes, comprenant une étape e) de traitement en autoclave de ladite structure consolidée à une pression prédéfinie, de préférence entre 2 et 15 bar, de manière davantage préférée entre 3 et 10 bar.

14. Procédé de fabrication d'un composant dans un matériau composite en céramique renforcé par fibres avec des fibres continues, ledit composant ayant une géométrie complexe prédéfinie, ledit procédé comprenant les étapes de fonctionnement suivantes :
- la fabrication d'une préforme dans un matériau composite renforcé par fibres ayant la géométrie complexe prédéfinie du composant à fabriquer suivant le procédé de fabrication d'une préforme selon une ou plusieurs des revendications précédentes ;
- la pyrolyse de ladite préforme de manière à la rendre poreuse ;
- l'infiltration avec du silicium liquide de ladite préforme rendue poreuse de manière à obtenir ledit composant de matériau composite en céramique renforcé par fibres avec ladite géométrie complexe prédéfinie.

15. Procédé selon la revendication 14, comprenant une étape de densification avec du carbone de ladite préforme rendue poreuse, à effectuer avant ladite étape d'infiltration.

16. Procédé de fabrication d'un composant dans un matériau composite carbone-carbone renforcé par fibres avec des fibres continues, ledit composant ayant une géométrie complexe prédéfinie, ledit procédé comprenant les étapes de fonctionnement suivantes :
- la fabrication d'une préforme d'un matériau composite renforcé par fibres ayant la géométrie complexe prédéfinie du composant à fabriquer suivant le procédé de fabrication d'une préforme selon une ou plusieurs des revendications 1 à 13 ;
- la pyrolyse de ladite préforme de manière à la rendre poreuse ;
- la densification avec du carbone de ladite préforme rendue poreuse, de manière à obtenir ledit composant dans un matériau composite carbone-carbone renforcé par fibres avec des fibres continues avec ladite géométrie complexe prédéfinie.
